# EUROPEAN PATENT APPLICATION

(11) **EP 1 938 915 A1**
(43) Date of publication of application: **02.07.2008**
(21) Application number: 06380337.3
(22) Date of filing: 28.12.2006
(51) Int. Cl.: B21K 25/00

(54) **Procedure and tool for joining by riveting a bushing and flat part, especially applicable to a clutch or brake pedal**

(71) Applicant: Autotech Engineering, A.I.E., 48220 Abadiño (Vizcaya) (ES); Gestamp Vigo, S.A., 36400 Porriño (Pontevedra) (ES); Gestamp MB Irametal, S.A., 46400 Almussafes (Valencia) (ES)
(72) Inventor: Feyo Gebhard, Bernhard, 4450 - 198 Matosinhos (PT)
(74) Representative: Carpintero Lopez, Francisco

(57) **Abstract**

The invention relates to a procedure and tool for joining a bushing (1) and a flat part (2) wherein an orifice (3) is defined to house the bushing (1) that protrudes in respective stretches on both sides of the flat part (2). According to the invention, the procedure consists of applying a combined axial and radial force on the outer face of each stretch of the bushing (1) to cause the flow of the bushing's material (1) in the proximity of both sides of the flat part (2) until it forms a conical shape rivet (5) on the two faces of said flat part (2).

## Description

### OBJECT OF THE INVENTION

The present invention is applicable to the joining of two parts by riveting, wherein one part is a bushing and the other part has at least one flat section wherein an orifice is defined that incorporates the bushing. This procedure of joining by riveting is especially applicable to the joint between a brake or clutch pedal's rotation bushing and the pedal body.

The object of the invention relates to the development of a joining procedure by riveting wherein the riveting operation itself is performed in such a way that a controlled flow of material is obtained for its correct distribution, so that when the parts are joined, the bushing retains its concentricity and has a good finish.

Likewise, another object of this invention is to develop punches with a suitable geometry on their attack edge to achieve the flow of material in accordance with the abovementioned joining procedure.

### BACKGROUND OF THE INVENTION

In standard car pedal architectures, whether clutches or brakes, they are articulated in relation to an shaft that is mounted on a series of supports. The pedal body is normally designed in thick plate of between 6 and 8 mm, and has a certain length, which means that in order to guarantee good articulation of the pedal in relation to the shaft around which it rotates it is contemplated for the pedal body to incorporate a bushing that increases the contact surface with said shaft.

This bushing is inserted in an orifice defined in the pedal body and is generally joined to the pedal body through weld beads applied to both sides, or the bushing and body is joined by riveting.

The weld joining solution entails the application of a large amount of heat, which generally causes deformation of the bushing, and usually noticeable defects in the quality of the finish.

In the event of joining by riveting, conventional riveting is resorted to by applying punches on either side of the bushing, which pressure with an exclusively axial force generating toroidal protuberances on the bushing that are defined on both sides of the pedal body, thus ensuring the fixing between the bushing and the body.

Due to the application of this force in an axial direction, accumulations of material occur and misalignments between both stretches of the bushing, as well as a poor internal finish, a situation that negatively affects the quality of the joint, consequently influencing the assembly's end performance.

### DESCRIPTION OF THE INVENTION

The procedure of joining by riveting proposed by this invention aims to resolve the problems set out above, by providing a method to conduct this operation between the bushing and the flat part that has an orifice to house this bushing for its subsequent joining by riveting.

According to this procedure, the proposal is to achieve the riveting through a combined action of two punches that are directed towards each end of the bushing situated on both sides of the flat part, simultaneously applying an axial and a radial pressure on the material that flows along the outer face of the bushing in the proximity of both faces of the flat part.

The force of impact F of the punches that is transmitted axially breaks down into a deformation force f and another radial force f" that counteracts the material flow, with both forces f, f'' giving rise in combination to a rivet with outer walls in a conical shape.

Previously, the bushing has been introduced in the flat part's orifice, in such a way that a stretch of the bushing protrudes on one side of the flat part and another stretch protrudes on the other side of the flat part, next a male part is introduced inside it and the abovementioned pressure is applied, on both sides and on the outer face of the bushing, causing the bushing's material to flow in a controlled manner until respective rivets with a conical shape are formed on the two faces of the flat part.

In line with this conical riveting procedure, the force applied in the radial direction favours the flow of material towards the flat part, in such a way that the spaces existing between the bushing and the flat part are totally filled, thus increasing the join's resistance.

As a result, a better quality of the joint is achieved, both in terms of the internal finish of the bushing and in terms of the concentricity between the stretches of the bushing positioned on either side of the flat part.

The riveting procedure disclosed herein is fundamentally applicable to the joint between the body of a clutch or brake pedal, and a bushing with which it forms an assembly that rotates around a fixed shaft via said bushing. In this case, said flat part is a stretch of the pedal body, which tends to be made of metal, at the end whereof an orifice is defined to house the bushing.

The joint by conical riveting between these two parts is performed in the described terms, defining corresponding conical rivets in the base of the two stretches of the bushing on the faces of the pedal body.

At the same time, the riveting procedure, as described above, can be applied to the joint between a strip and a separator that form part of the clutch and brake pedal assemblies.

The tool used to perform this riveting operation consists of respective punches facing each other with coordinated and opposite movements, in each of which a cylindrical cavity is defined scaled to act on the bushing, which widens at the far end of the punch with a conical attack cut, with an inclination that converges towards the interior that constitutes the section that propitiates the flow of the bushing's material to form the conical rivet.

### DESCRIPTION OF THE DRAWINGS

To complement the present description and with a view to contributing towards a better understanding of the invention's characteristics, in accordance with a preferred embodiment thereof, a set of drawings is attached as an integral part of this description, that by way of illustration but not limitation, represent the following:
Figure 1.- Is a section view that shows how the toroidal rivets are produced according to a conventional procedure belonging to the state of the art.
Figure 2.- is a view showing the procedure and tool for producing the conical rivet according to the invention.
Figure 3.- Is a view in perspective that shows the bushing joined to the pedal body by riveting.

### PREFERRED EMBODIMENT OF THE INVENTION

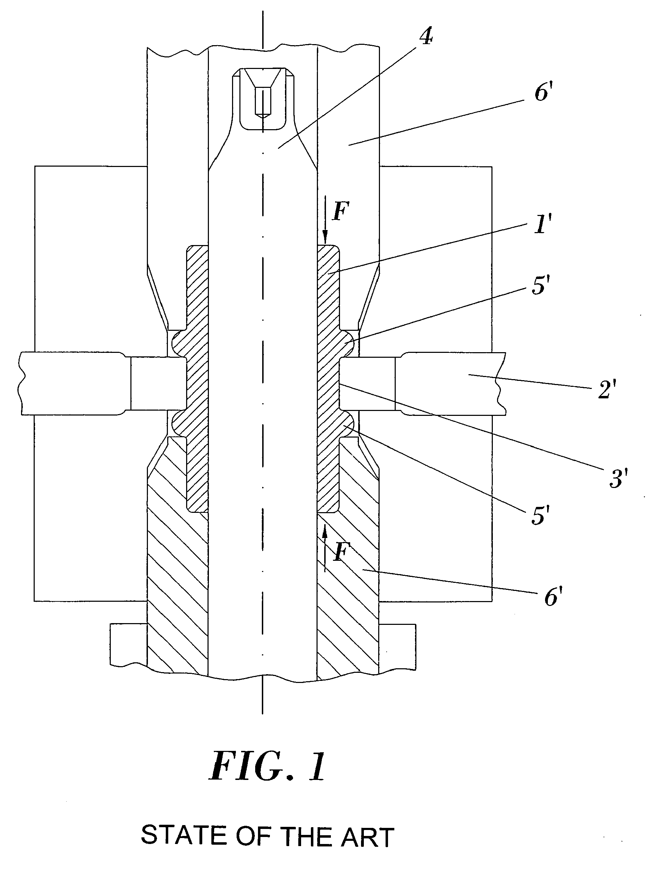

Figure 1 shows a solution known in the state of the art for joining by riveting a bushing (1') and a flat part (2) wherein an orifice (3) is defined where the bushing (1') protrudes in respective stretches on both sides of the flat part (2). The riveting operation is performed with respective punches (6'), that when applied against the bushing (1'), apply an axial force that give rise to corresponding rivets with a toroidal shape (5') that are defined on both sides of the flat part (2), thus establishing the joint between the bushing (1') and flat part (2). As described earlier, this solution is not satisfactory due to the fact that it produces a poor quality internal finish and causes problems of concentricity between the two stretches of the bushing (1') positioned on either side of the flat part (2).

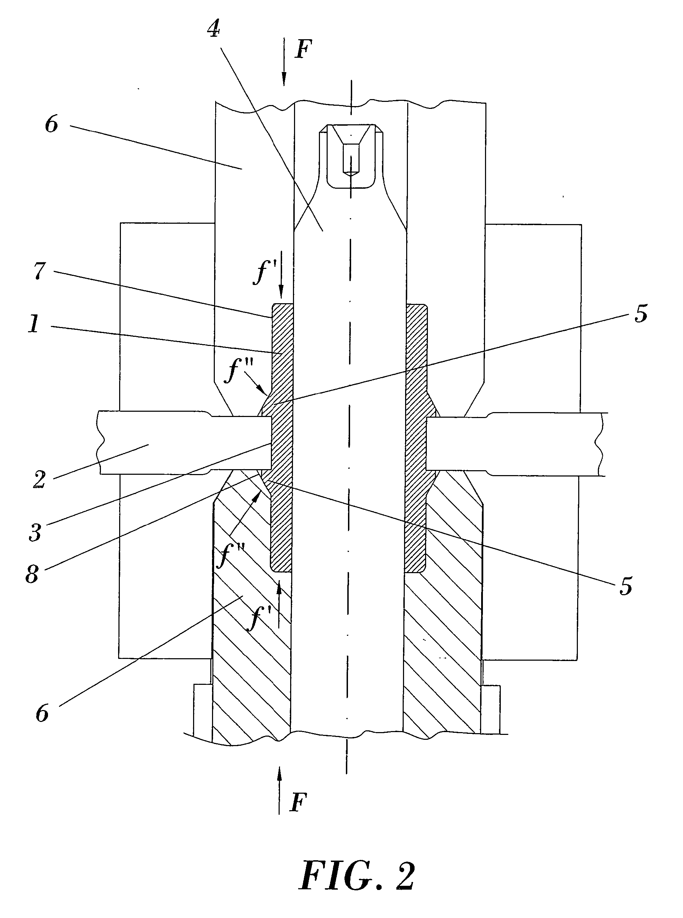

Figure 2 shows the procedure and riveting tool in accordance with the present invention, which likewise shows a bushing (1) and a flat part (2) containing an orifice (3), where the bushing (1) protrudes in respective stretches on either side of the flat part (2). In this case, the joint by riveting between the previously assembled bushing (1) and flat part (2) occurs according to the following steps:
- introduction of a male part (4) within the bushing (1), of a greater length that the bushing (1), and
- application of a force F on the outer face of both stretches of the bushing (1) to cause the flow of the bushing's material (1) in the proximity of both of the flat part's faces (2) until a rivet with outer walls in a conical shape (5) is formed on both faces of the flat part (2).

Force F breaks down into a deformation force f and a radial force f' that counteracts the flow of material, these forces are achieved by applying the axial pressure of respective punches (6) facing each other and aiming in opposite directions, in each of which a cylindrical cavity (7) is defined, which widens at the far end of the punch (6) with a conical attack cut (8) with an inclination that converges towards the inside designed to act on the bushing (1) and define the conical shape rivet (5) on both faces of the flat part (2).

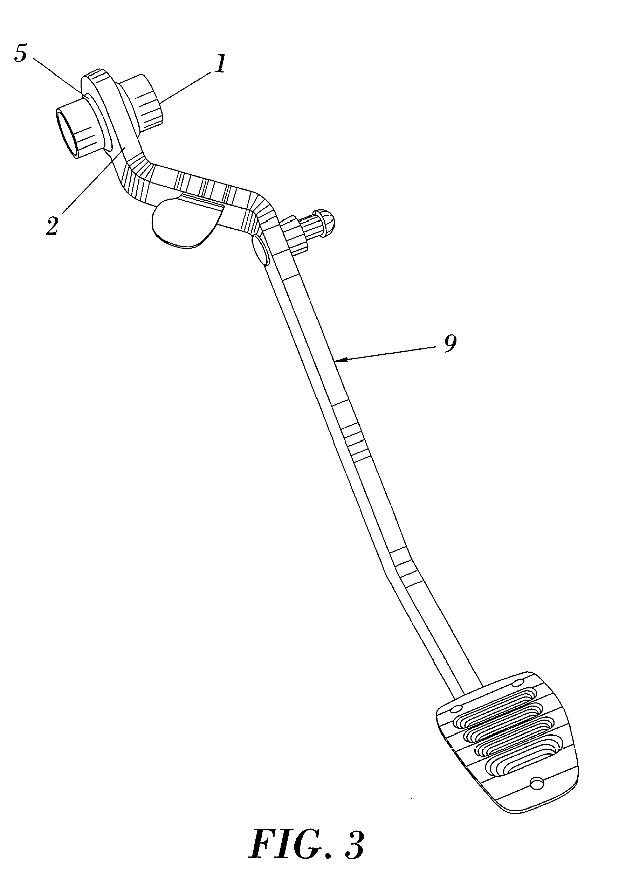

Figure 3 shows the fundamental application of this procedure, and depicts a pedal's rotating bushing (1) and body (9) itself joined by the rivet, wherein the riveting operation is made in accordance with what has been described herein, wherein the flat part (2) consists of the end of the body (9) of the pedal wherein an orifice (3) is defined to incorporate the bushing (1).

Figure 3 shows the pedal body (9) and the bushing (1) joined by the conical rivet (5).

## Claims

1. Procedure for joining by riveting a bushing (1) and a flat part (2) wherein an orifice (3) is defined where the bushing (1) is found, that protrudes in respective stretches defined on either side of the flat part (2), that occurs firstly with the introduction of a male part (4) in the bushing (1) with a greater length that the bushing (1), **characterised in that** an impact force F is then applied that is transmitted axially along the outer face of each stretch of the bushing (1), that breaks down into a deformation force f and another radial force f' that counteracts the flow of the material, with both forces f, f" in combination resulting in a rivet (5) with outer walls in a conical shape.

2. Procedure for joining by riveting a bushing (1) and a flat part (2) according to claim 1, **characterised in that** the deformation force f and the radial force f" are produced by application of pressure in an axial direction of respective punches (6) facing each other and aiming in opposite directions, each whereof has a cylindrical cavity (7), scaled to act on the bushing (1), which widens at the far end of the punch (6) in a conical attack cut (8) with an inclination that converges towards the inside, through which the conical shape rivet (5) is formed.

3. Procedure for joining by riveting a bushing (1) and a flat part (2) according to claims 1 or 2, **characterised in that** the bushing (1) is the rotating bushing of a clutch or brake pedal and the flat part (2) consists of the far end of the pedal body (9) that has a orifice (3) designed to house the rotating bushing.

4. Tool for joining by riveting a bushing (1) and a flat part (2) wherein a orifice (3) is defined to house the bushing (1) that protrudes in respective stretches on either side of the flat part (2), **characterised in that** it comprises respective punches (6) facing each other and displaceable in a coordinated manner in opposite directions, each of which has a cylindrical cavity (7), scaled to act on the bushing (1), which widens in the far end of the punch (6) in a conical attack cut (8) with an inclination that converges towards the inside designed to act on the bushing (1) and form a conical shape rivet (5) on both faces of the flat part (2).
